# EUROPEAN PATENT SPECIFICATION

(11) **EP 3 416 227 B1**
(45) Date of publication and mention of the grant of the patent: **15.04.2020**
(21) Application number: 18176820.1
(22) Date of filing: 08.06.2018
(51) Int. Cl.: H01M 10/0525, H01M 10/0567

(54) **LITHIUM SECONDARY BATTERY INCLUDING PHOSPHATE-BASED ADDITIVE**
LITHIUMSEKUNDÄRBATTERIE MIT PHOSPHATBASIERTEM ADDITIV
BATTERIE SECONDAIRE AU LITHIUM COMPRENANT UN ADDITIF À BASE DE PHOSPHATE

(30) Priority: 12.06.2017 KR 20170073290
(43) Date of publication of application: 19.12.2018
(73) Proprietor: Samsung Electronics Co., Ltd., Gyeonggi-do 16677 (KR); Samsung SDI Co., Ltd., Gyeonggi-do (KR)
(72) Inventor: KOH, Myongchun, 16678 Gyeonggi-do, (KR); PARK, Insun, 16678 Gyeonggi-do, (KR); PARK, Hosang, 16678 Gyeonggi-do, (KR); SEO, Jinah, 16678 Gyeonggi-do, (KR); CHUNG, Yeonji, 16678 Gyeonggi-do, (KR)
(74) Representative: Elkington and Fife LLP

(56) References cited:
- US-A1- 2013 295 468
- KANG XU ET AL: "An Attempt to Formulate Nonflammable Lithium Ion Electrolytes with Alkyl Phosphates and Phosphazenes", JOURNAL OF THE ELECTROCHEMICAL SOCIETY, vol. 149, no. 5, 1 January 2002 (2002-01-01), page A622, XP055142440, ISSN: 0013-4651, DOI: 10.1149/1.1467946

## Description

### FIELD OF THE INVENTION

The present disclosure relates to a lithium secondary battery including a phosphate-based additive.

### BACKGROUND OF THE INVENTION

Lithium secondary batteries are used as driving sources of portable electronic devices, such as camcorders, mobile phones, and laptop computers. Lithium secondary batteries are rechargeable at high rates and have a high energy density per unit weight of about three times higher than that of the conventional lead storage batteries, nickel-cadmium (Ni-Cd) batteries, nickel-hydrogen batteries, or nickel-zinc batteries.

A positive active material in a positive electrode of lithium secondary batteries is typically a lithium-containing metal oxide. For example, a composite oxide of lithium and a metal selected from cobalt, manganese, nickel (Ni), and a combination thereof may be used as a positive active material. Ni-rich positive active materials containing a large amount of Ni can be used to realize a battery having large capacity as compared with a battery including a lithium-cobalt oxide. Thus, studies on Ni-rich positive active materials are underway.

However, in the case of Ni-rich positive active materials, the positive active materials may have a surface having a weak structure, and thus the positive active materials may have poor lifespan characteristics and increased resistance.

Therefore, there is a demand for a lithium secondary battery which exhibits large capacity, excellent lifespan characteristics, and low resistance by including a Ni-rich positive active material.

Kang Xu et al.: "An attempt to formulate nonflammable lithium ion electrolytes with alkyl phosphates and phosphazes", Journal of The Electrochemical Society, 149, (5), 2002, A622-A626 discloses trimethylphosphate and triethyl phosphate as cosolvents in lithium-ion batteries. US 2013/0295468 discloses ester-based compounds as non-aqueous electrolyte solutions.

### SUMMARY OF THE INVENTION

Provided is a lithium secondary battery having a novel structure.

Additional aspects will be set forth in part in the description which follows and, in part, will be apparent from the description, or may be learned by practice of the presented embodiments.

According to an aspect of an embodiment, a lithium secondary battery includes a positive electrode; a negative electrode; and an electrolyte disposed between the positive electrode and the negative electrode, wherein the positive electrode includes a positive active material represented by Formula 1, the electrolyte includes a lithium salt; a non-aqueous solvent; and a phosphate-based compound represented by Formula 2, and the phosphate-based compound is comprised at an amount of lower than about 3 wt% based on the total weight of the electrolyte:

<Formula 1> LiₓNi_{y}M_{1-y}O_{2-z}A_{z}

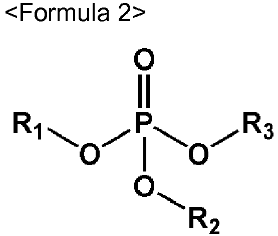

wherein, in Formula 1,
0.9≤x≤1.2, 0.7≤y≤0.95, and 0≤z<0.2;
M is at least one element selected from the group consisting of Al, Mg, Mn, Co, Fe, Cr, V, Ti, Cu, B, Ca, Zn, Zr, Nb, Mo, Sr, Sb, W, and Bi; and
A is an element having an oxidation number of -1, -2 or -3; and
in Formula 2,
R₁ to R₃ are each independently an unsubstituted linear or branched C₁-C₃₀ alkyl group or an unsubstituted C₆-C₆₀ aryl group.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, a lithium secondary battery according to an embodiment will be described in detail.

The lithium secondary battery according to an embodiment includes a positive electrode; a negative electrode; and an electrolyte disposed between the positive electrode and the negative electrode,
wherein the positive electrode includes a positive active material represented by Formula 1,
the electrolyte includes a lithium salt; a non-aqueous solvent; and a phosphate-based compound represented by Formula 2, and
the phosphate-based compound is included at an amount lower than about 3 wt% based on the total weight of the electrolyte:

<Formula 1> LiₓNi_{y}M_{1-y}O_{2-z}A_{z}

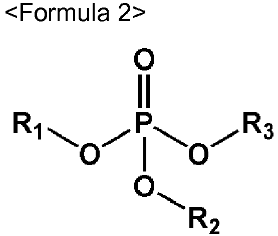

In Formula 1,
0.9≤x≤1.2, 0.7≤y≤0.98, and 0≤z<0.2;
M is at least one element selected from the group consisting of Al, Mg, Mn, Co, Fe, Cr, V, Ti, Cu, B, Ca, Zn, Zr, Nb, Mo, Sr, Sb, W, and Bi; and
A is an element having an oxidation number of -1, -2, or -3; and
in Formula 2,
R₁ to R₃ are each independently an unsubstituted linear or branched C₁-C₃₀ alkyl group or an unsubstituted C₆-C₆₀ aryl group.

As well as the positive active material represented by Formula 1, despite the advantage of manufacturing a high capacity battery, a lithium metal composite oxide containing a large amount of Ni may have problems such as severe deterioration of lifespan characteristics including a capacity retention ratio or a resistance increase ratio, and thus the lithium metal composite oxide may not be commercialized. The deterioration may be caused by elution of cation Ni³⁺ into the electrolyte from the positive electrode and disproportionation that results in some of the cation Ni³⁺ becoming Ni⁴⁺ during discharging of the battery and producing NiO. Due to such problems, lifespan characteristics may be deteriorated, and resistance may increase. Thus, to resolve these problems, a structure of the lithium secondary battery includes an electrolyte including the phosphate-based compound represented by Formula 2, which protects the cation Ni³⁺, and thus the elution of the cation Ni³⁺ and the disproportionation may be prevented.

In particular, the phosphate-based compound may have high affinity with the cation Ni³⁺, through which side reactions of the cation Ni³⁺ may be suppressed, and, particularly, even in a battery that may be driven at a high voltage, high affinity with the cation Ni³⁺ may be maintained, and through this, the elution of the cation Ni³⁺ or the oxidation and disproportionation of becoming Ni⁴⁺ may be suppressed.

Here, the phosphate-based compound included in the electrolyte may be included at an amount lower than about 3 wt% based on the total weight of the electrolyte. However, embodiments are not limited thereto, and the amount may be in any range that may maintain lifespan characteristics by protecting Ni³⁺. When the amount of the phosphate-based compound is higher than about 3 wt%, self-decomposition of the phosphate-based compound may significantly occur, which may result in an increase in film resistance and deterioration of battery capacity, storage stability, and cycle characteristics, and thus the amount is not suitable.

For example, the phosphate-based compound may be included at an amount in a range of about 0.1 wt% or higher to lower than about 3 wt% based on the total weight of the electrolyte. For example, the phosphate-based compound may be included at an amount in a range of about 0.1 wt% or higher to about 2 wt% or lower based on the total weight of the electrolyte. For example, the phosphate-based compound may be included at an amount in a range of about 0.2 wt% or higher to about 2 wt% or lower based on the total weight of the electrolyte. For example, the phosphate-based compound may be included at an amount in a range of about 1 wt% or higher to about 2 wt% or lower based on the total weight of the electrolyte.

When an amount of the phosphate-based compound is lower than about 0.1 wt%, the amount is too small that a protecting layer may not be formed, and sufficient resistance decreasing effects may not be obtained.

In one embodiment, R₁ to R₃ may each independently be selected from an unsubstituted linear or branched C₁-C₃₀ alkyl group and an unsubstituted C₆-C₆₀ aryl group.

The C₁-C₃₀ alkyl group may be, for example, C₁-C₂₅ alkyl group, C₁-C₂₀ alkyl group, C₁-C₁₅ alkyl group, C₁-C₁₀ alkyl group, or C₁-C₅ alkyl group, For example, the C₁-C₃₀ alkyl group may be selected from, for example, a methyl group, an ethyl group, a propyl group, an isopropyl group, a butyl group, a sec-butyl group, a tert-butyl group, and an isobutyl group, but embodiments are not limited thereto.

The C₆-C₆₀ aryl group may be, for example, C₆-C₅₀ aryl group, C₆-C₄₀ aryl group, C₆-C₃₀ aryl group, C₆-C₂₀ aryl group, C₆-C₁₉ aryl group, C₆-C₁₈ aryl group, C₆-C₁₇ aryl group, C₆-C₁₆ aryl group, C₆-C₁₅ aryl group, C₆-C₁₄ aryl group, C₆-C₁₃ aryl group, C₆-C₁₂ aryl group, C₆-C₁₁ aryl group, or C₆-C₁₀ aryl group. For example, the C₆-C₆₀ aryl group may be selected from, for example, a phenyl group, a biphenyl group, and a tertphenyl group, but embodiments are not limited thereto.

In one embodiment, the phosphate-based compound may be selected from trimethyl phosphate (TMP), triethyl phosphate (TEP), and triphenyl phosphate (TPP).

The electrolyte includes a lithium salt. The lithium salt may be dissolved in an organic solvent and thus may serve as a source of lithium ions in a battery and, for example, may promote migration of lithium ions between the positive electrode and the negative electrode.

An anion of the lithium salt included in the electrolyte may be at least one selected from the group consisting of PF₆⁻, BF₄⁻, SbF₆⁻, AsF₆⁻, C₄F₉SO₃⁻, ClO₄⁻, AlO₂⁻, AlCl₄⁻, CₓF₂ₓ₊₁SO₃⁻ (where, x is a natural number), (CₓF₂ₓ₊₁SO₂)(C_{y}F_{2y+1}SO₂)N⁻(where, x and y are a natural number), and a halide.

For example, the lithium salt may be selected from lithium difluoro(oxalato)borate (LiDFOB), lithium bis(oxalato)borate (LiBOB), lithium difluorobis(oxalato)phosphate (LiDFOP), LiBF₄, LiPF₆, LiCF₃SO₃, (CF₃SO₂)₂NLi, (FSO₂)₂NLi, and a mixture thereof. For example, the lithium salt may be LiPF₆.

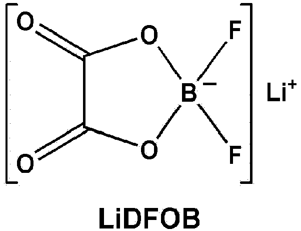

Also, the lithium salt may include a plurality of salts and, for example, may include LiPF₆ at a concentration in a range of about 0.6 M to about 2.0 M as a main salt and other salts such as LiDFOB, LiBOB, LiDFOP, LiBF₄, LiCF₃SO₃, (CF₃SO₂)₂NLi, and (FSO₂)₂Ni at an amount not exceeding that of the main salt.

In particular, the lithium salt may include LiPF₆ at a concentration in a range of about 1 M to about 1.5 M as a main salt and LiDFOB, LiBOB, LiDFOP, LiBF₄, LiCF₃SO₃, (CF₃SO₂)₂NLi, (FSO₂)₂Ni or a combination thereof at an amount in a range of about 0.5 wt% to about 10 wt% based on the total weight of the electrolyte.

For example, the non-aqueous solvent may be selected from the group consisting of a carbonate-based solvent, an ester-based solvent, a ketone-based solvent, an aprotic solvent, and a mixture thereof. Examples of the carbonate-based solvent may include dimethyl carbonate (DMC), diethyl carbonate (DEC), ethyl methyl carbonate (EMC), dipropyl carbonate (DPC), methyl propyl carbonate (MPC), ethyl propyl carbonate (EPC), ethylene carbonate (EC), propylene carbonate (PC), and butylene carbonate (BC), and examples of the ester-based solvent may include methyl acetate, ethyl acetate, n-propyl acetate, t-butyl acetate, methyl propionate, ethyl propionate, γ-butyrolactone, decanolide, valerolactone, mevalonolactone, and caprolactone.

The aprotic solvent may be used alone or as a mixture of two or more aprotic solvents, and when the aprotic solvent is used in a mixture of two or more aprotic solvents, the mixing ratio may be appropriately controlled, according to battery performance, as may be obvious to one of ordinary skill in the art.

The carbonate-based solvent may be a mixture of a chain carbonate and a cyclic carbonate. In this case, the volume ratio of the chain carbonate and the cyclic carbonate may be in a range of about 1:1 to about 1:9, to obtain excellent electrolyte performance.

In some embodiments, the non-aqueous solvent may further include fluoroethylene carbonate (FEC), vinylene carbonate (VC), vinyl ethylene carbonate (VEC), a phosphorus (P)-containing compound other than phosphate compound represented by Formula 2, and a sulfur (S)-containing compound.

For example, the non-aqueous solvent may include FEC. For example, the lithium secondary battery may include FEC at an amount in a range of about 0.1 vol% to about 10 vol% based on the total volume of the non-aqueous solvent. For example, the lithium secondary battery may include FEC at an amount in a range of about 0.5 vol% to about 7 vol% based on the total volume of the non-aqueous solvent. For example, the lithium secondary battery may include FEC at an amount in a range of about 1 vol% to about 7 vol% based on the total volume of the non-aqueous solvent. For example, the lithium secondary battery may include FEC at an amount in a range of about 2 vol% to about 7 vol% based on the total volume of the non-aqueous solvent. When FEC is included in the non-aqueous solvent at an amount within these ranges, an effective solid electrolyte interface (SEI) film that does not degrade a diffusion ratio of lithium ions may be formed in a short period of time.

The electrolyte may include a carbonate including carbon-carbon single bond, a carbon-carbon double bond or a carbon-carbon triple bond, a carboxylic acid anhydride including carbon-carbon single bond, a carbon-carbon double bond or a carbon-carbon triple bond or a combination thereof. The carbonate and carboxylic acid anhydride may be linear or cyclic.

For example, the electrolyte may further include VC, VEC, maleic anhydride, succinic anhydride, or a mixture thereof. For example, the lithium secondary battery may further include VC, VEC, maleic anhydride, succinic anhydride, or a mixture thereof at an amount in a range of about 0.1 wt% to about 3 wt% based on the total weight of the electrolyte. For example, the lithium secondary battery may further include VC, VEC, maleic anhydride, succinic anhydride, or a mixture thereof at an amount in a range of about 0.1 wt% to about 2 wt% based on the total weight of the electrolyte.

In some embodiments, the electrolyte may further include maleic anhydride, but embodiments are not limited thereto. For example, the lithium secondary battery may further include maleic anhydride at an amount in a range of about 0.1 wt% to about 1.5 wt% based on the total weight of the electrolyte. For example, the lithium secondary battery may further include maleic anhydride at an amount in a range of about 0.1 wt% to about 1.0 wt% based on the total weight of the electrolyte. For example, the lithium secondary battery may further include maleic anhydride at an amount in a range of about 0.1 wt% to about 0.5 wt% based on the total weight of the electrolyte.

For example, the electrolyte may further include a P-containing compound other than phosphate compound represented by Formula 2, a S-containing compound, or a mixture thereof. For example, the electrolyte may further include a P-containing compound other than phosphate compound represented by Formula 2, a S-containing compound, or a mixture thereof at an amount of about 4 wt% or lower. For example, the electrolyte may further include a P-containing compound other than phosphate compound represented by Formula 2, a S-containing compound, or a mixture thereof at an amount in a range of about 0.1 wt% or higher to about 3 wt% or lower based on the total weight of the electrolyte. For example, the electrolyte may further include a P-containing compound other than phosphate compound represented by Formula 2, a S-containing compound, or a mixture thereof at an amount in a range of about 0.1 wt% or higher to about 2 wt% or lower based on the total weight of the electrolyte. For example, the electrolyte may further include a P-containing compound other than phosphate compound represented by Formula 2, a S-containing compound, or a mixture thereof at an amount in a range of about 0.5 wt% to about 2 wt% based on the total weight of the electrolyte.

The P-containing compound other than phosphate compound represented by Formula 2 may be one or more selected from a phosphine compound and a phosphite compound, and the S-containing compound may be a sulfone compound, a sulfonate compound, a disulfonate compound, or a mixture thereof.

For example, the electrolyte may not include a P-containing compound other than phosphate compound represented by Formula 2 or, in some embodiments, a phosphite compound.

In some embodiments, examples of the phosphine compound may include triphenylphosphine, tris(o-tolyl)phosphine, or tris(butyl)phosphine, but embodiments are not limited thereto. Examples of the phosphite compound may include triethylphosphite (TEPi), trimethylphosphite, tripropylphosphite, tributylphosphite, tris(trimethylsilyl)phosphite, or triphenylphosphite, but embodiments are not limited thereto.

Examples of the sulfone compound may include ethyl methyl sulfone, divinyl sulfone, tetramethylene sulfone, or bisphenylsulfone, but embodiments are not limited thereto. Examples of the sulfonate compound may include methyl methane sulfonate, ethyl methane sulfonate, or diallyl sufonate, but embodiments are not limited thereto. The disulfonate compound may be, for example, methylene methane disulfonate (MMDS), busulfan, tosyloxydisulfonate, or methylene bismethansulfonate, but embodiments are not limited thereto.

As described above, when a lithium metal oxide contains a large amount of Ni, despite the advantage of manufacturing a high capacity battery, as an amount of cation Ni³⁺ increases in a conventional battery, lifespan characteristics may deteriorate, and resistance may increase. As described above, when a disulfonate compound is included, sulfonate may react with cation Ni³⁺ and stabilize the battery, and thus resistance may decrease. Here, when an amount of the disulfonate compound exceeds about 2 wt% based on the total weight of the electrolyte, disulfonate may react with lithium cations generated from a positive active material, and thus lithium cations may be consumed and may not contribute to battery characteristics.

The phosphate-based compound represented by Formula 2 may be easily decomposed due to a reaction with the negative electrode, and, as described below, the lithium secondary battery including a negative active material or a carbonaceous negative active material, which includes a metalloid alloyable with lithium, has problems of gas occurrence due to a catalyst function at a high temperature and lifespan characteristics deterioration. As described above, when FEC, VC, VEC, a P-containing compound other than phosphate compound represented by Formula 2, or a S-containing compound is included at an amount within these ranges, a passivation layer containing a chemical reaction resultant of the materials, that is, an SEI film may be formed on a part of or on the whole negative electrode surface. Since gas occurrence may be prevented due to the SEI film when the lithium secondary battery is preserved at a high temperature, the battery may have improved safety and performance.

Hereinafter, a structure of the lithium secondary battery will be described in detail.

The positive electrode includes the positive active material represented by Formula 1, and, for example, A in Formula 1 may be one selected from a halogen, S, and N, but embodiments are not limited thereto.

For example, in Formula 1, y denotes an amount of Ni in the positive active material, which may satisfy 0.7≤y≤0.98. For example, in Formula 1, y may satisfy 0.8≤y≤0.98. For example, in Formula 1, y may satisfy 0.8≤y≤0.9. For example, in Formula 1, y may satisfy 0.8≤y≤0.88. When an amount of Ni in the positive active material is lower than 70%, the amount of Ni is too small, even though a surface structure of the positive electrode is stable and deterioration of lifespan characteristics such as elution of cation Ni³⁺ or disproportionation in a Ni-rich positive active material may occur less, a phosphate-based compound having affinity with Ni³⁺ attaches on a surface, and thus resistance may increase. Due to the increase in resistance, the battery may have a decreased lifespan and deteriorated resistance characteristics.

For example, the positive active material may be represented by Formula 3 or Formula 4:

<Formula 3> LiNi_{y'}Co_{1-y'-z'}Al_{z'}O₂

<Formula 4> LiNi_{y'}Co_{1-y'-z'}Mn_{z'}O₂

In Formula 3 and Formula 4, 0.9≤x'≤1.2, 0.8≤y'≤0.98, 0<z'<0.1, and 0<1-y'-z'<0.2.

For example, the positive electrode may include at least one selected from LiNi_{0.8}Co_{0.15}Mn_{0.05}O₂, LiNi_{0.85}Co_{0.1}Mn_{0.05}O₂, LiNi_{0.88}Co_{0.08}Mn_{0.04}O₂, LiNi_{0.88}Co_{0.08}Al_{0.04}O₂, Li_{1.02}Ni_{0.80}Co_{0.15}Mn_{0.05}O₂, Li_{1.02}Ni_{0.85}Co_{0.10}Mn_{0.05}O₂, Li_{1.02}Ni_{0.88}Co_{0.08}Mn_{0.04}O₂, Li_{1.02}Ni_{0.88}Co_{0.08}Al_{0.04}O₂, LiNi_{0.8}Co_{0.15}Al_{0.05}O₂, LiNi_{0.88}Co_{0.1}Al_{0.02}O₂, LiNi_{0.88}Co_{0.1}Mn_{0.02}O₂, LiNi_{0.85}Co_{0.1}Al_{0.05}O₂, and LiNi_{0.88}Co_{0.1}Mn_{0.02}O₂ as a positive active material. For example, the positive electrode may include at least one selected from LiNi_{0.8}Co_{0.15}Mn_{0.05}O₂, LiNi_{0.85}Co_{0.1}Mn_{0.05}O₂, LiNi_{0.88}Co_{0.08}Mn_{0.04}O₂, LiNi_{0.88}Co_{0.08}Al_{0.04}O₂, Li_{1.02}Ni_{0.80}Co_{0.15}Mn_{0.05}O₂, Li_{1.02}Ni_{0.85}Co_{0.10}Mn_{0.05}O₂, Li_{1.02}Ni_{0.88}Co_{0.08}Mn_{0.04}O₂, and Li_{1.02}Ni_{0.88}Co_{0.08}Al_{0.04}O₂ as a positive active material, but embodiments are not limited thereto.

The positive electrode may further include at least one selected from the group consisting of lithium cobalt oxide, lithium nickel cobalt manganese oxide, lithium nickel cobalt aluminum oxide, lithium iron phosphate, and lithium manganese oxide in addition to the foregoing positive active materials, but embodiments of the positive active materials are not limited thereto. Any suitable positive active material available in the art may further be included in the positive electrode.

For example, the positive electrode may further include a positive active material represented by any one of the following formulae: LiₐA_{1-b}B_{b}D₂ (wherein 0.90≤a≤1.8 and 0≤b≤0.5); LiₐE_{1-b}B_{b}O_{2-c}D_{c} (wherein 0.90≤a≤1.8, 0≤b≤0.5, and 0≤c≤0.05); LiE_{2-b}B_{b}O_{4-c}D_{c} (wherein 0≤b≤0.5 and 0≤c≤0.05); LiₐNi_{1-b-c}Co_{b}B_{c}D_{α} (wherein 0.90≤a≤1.8, 0≤b≤0.5, 0≤c≤0.05, and 0<α≤2); LiₐNi_{1-b-c}Co_{b}B_{c}O_{2-α}F_{α} (wherein 0.90≤a≤1.8, 0≤b≤0.5, 0≤c≤0.05, and 0<α < 2); LiₐNi_{1-b-c}Mn_{b}B_{c}D_{α} (wherein 0.90≤a≤1.8, 0≤b≤0.5, 0≤c≤0.05, and 0<α≤2); LiₐNi_{1-b-c}Mn_{b}B_{c}O_{2-α}F_{α} (wherein 0.90≤a≤1.8, 0≤b≤0.5, 0≤c≤0.05, and 0<α<2); LiₐNi_{b}E_{c}G_{d}O₂ (wherein 0.90≤a≤1.8, 0≤b≤0.9, 0≤c≤0.5, and 0.001≤d≤0.1); LiₐNi_{b}Co_{c}Mn_{d}GeO₂ (wherein 0.90≤a≤1.8, 0≤b≤0.9, 0≤c≤0.5, 0≤d≤0.5, and 0.001≤e≤0.1); LiₐNiG_{b}O₂ (wherein 0.90≤a≤1.8 and 0.001≤b≤0.1); LiₐCoG_{b}O₂ (wherein 0.90≤a≤1.8 and 0.001≤b≤0.1); LiₐMnG_{b}O₂ (wherein 0.90≤a≤1.8 and 0.001≤b≤0.1 ); LiₐMn₂G_{b}O₄ (wherein 0.90≤a≤1.8 and 0.001≤b≤0.1); QO₂; QS₂; LiQS₂; V₂O₅; LiV₂O₅; LiIO₂; LiNiVO₄; Li_{(3-f)}J₂(PO₄)₃ (wherein 0≤f≤2); Li_{(3-f)}Fe₂(PO₄)₃ (wherein 0≤f≤2); and LiFePO₄.

In the foregoing formulae, A may be selected from nickel (Ni), cobalt (Co), manganese (Mn), and a combination thereof; B may be selected from Al, Ni, Co, Mn, Cr, Fe, magnesium (Mg), strontium (Sr), V, a rare-earth element, and a combination thereof; D may be selected from oxygen (O), fluorine (F), sulfur (S), phosphorus (P), and a combination thereof; E may be selected from Co, Mn, and a combination thereof; F may be selected from F, S, P, and a combination thereof; G may be selected from Al, Cr, Mn, Fe, Mg, lanthanum (La), cerium (Ce), Sr, V, and a combination thereof; Q may be selected from Ti, Mo, Mn, and a combination thereof; I may be selected from Cr, V, Fe, scandium (Sc), yttrium (Y), and a combination thereof; and J may be selected from V, Cr, Mn, Co, Ni, Cu, and a combination thereof.

A positive electrode may be prepared by the following method.

The positive electrode may be prepared by applying, drying, and pressing a positive electrode active material on a positive electrode current collector. In addition to the above-described positive electrode active materials, a positive active material composition in which a binder and a solvent are mixed may be prepared, if necessary.

The positive active material composition may further include a conductive agent or a filler.

In one or more embodiments, the positive active material composition may directly be coated on a metallic current collector and then dried to prepare a positive electrode plate. In one or more embodiments, the positive active material composition may be cast on a separate support to form a positive active material film, which may then be separated from the support and laminated on a metallic current collector to prepare a positive electrode plate.

In some embodiments, a loading level of a prepared positive active material composition may be about 30 milligrams per square centimeter (mg/cm²) or greater, and in some embodiments, about 35 mg/cm² or greater, and in some embodiments, about 40 mg/cm² or greater. In addition, an electrode density of the positive electrode may be about 3 grams per cubic centimeter (g/cc) or greater, and in some embodiments, about 3.5 g/cc or greater.

In an embodiment, in order to achieve a high cell energy density, a loading level of the prepared positive active material composition may be about 35 mg/cm² to about 50 mg/cm², and an electrode density thereof may be about 3.5 g/cc to about 4.2 g/cc.

In another embodiment, both surfaces of the positive electrode plate may be coated with the positive active material composition at a loading level of about 37 mg/cm² and at an electrode density of about 3.6 g/cc.

When a loading level and an electrode density of the positive active material composition are within any of these ranges, a battery including a positive electrode prepared from the positive active material composition may have a high cell energy density of about 500 watt-hours per liter (Wh/L) or greater. For example, the battery may have a cell energy density of about 500 Wh/L to about 900 Wh/L.

Examples of the solvent include, but are not limited to, N-methylpyrrolidone (NMP), acetone, and water. An amount of the solvent may be in a range of about 10 parts to about 100 parts by weight based on 100 parts by weight of the positive active material. When the amount of the solvent is within this range, a process for forming the positive active material layer may be performed efficiently.

The conductive agent may usually be added in an amount of about 1 wt% to about 30 wt% based on a total weight of a mixture including a positive active material. The conductive agent may be any suitable material having suitable electrical conductivity without causing an undesirable chemical change in a battery. Examples of the conductive agent include graphite, such as natural graphite or artificial graphite; a carbonaceous material, such as carbon black, acetylene black, Ketjen black, channel black, furnace black, lamp black, or summer black; conductive fibers, such as carbon fibers or metal fibers; fluorinated carbon; a metal powder of aluminum, or nickel; a conductive whisker, such as zinc oxide or potassium titanate; a conductive metal oxide, such as titanium oxide; and a conductive material, such as a polyphenylene derivative. A combination comprising at least two of the foregoing may also be used.

The binder is a component which may assist in bonding of an active material to a conductive agent and to a current collector, and may usually be added in an amount of about 1 wt% to about 30 wt% based on the total weight of a mixture including a positive active material. Examples of the binder may include polyvinylidene fluoride (PVdF), polyvinylidene chloride, polybenzimidazole, polyimide, polyvinyl acetate, polyacrylonitrile, polyvinyl alcohol, carboxymethyl cellulose (CMC), starch, hydroxypropyl cellulose, regenerated cellulose, polyvinyl pyrrolidone, polyethylene, polypropylene, polystyrene, polymethyl methacrylate, polyaniline, acrylonitrile butadiene styrene copolymer, phenol resin, epoxy resin, polyethylene terephthalate, polytetrafluoroethylene, polyphenyl sulfide, polyamideimide, polyetherimide, polyether sulfone, polyamide, polyacetal, polyphenylene oxide, polybutylene terephthalate, an ethylene-propylene-diene monomer (EPDM), a sulfonated EPDM, a styrene-butadiene rubber, a fluorine rubber, and various suitable copolymers. The filler may optionally be included as a component for suppressing expansion of a positive electrode. The filler may not be particularly limited, and may be any suitable fibrous material without causing an undesirable chemical change in a battery. For example, a fibrous material, such as an olefin-based polymer, e.g., polyethylene or polypropylene; glass fibers; or carbon fibers, may be used as a filler.

Amounts of the positive active material, the conductive agent, the filler, the binder, and the solvent may substantially be the same as those generally used in the art with respect to lithium batteries. At least one of the conductive agent, the filler, the binder, and the solvent may be omitted according to a use and a structure of a lithium battery.

In some embodiments, NMP may be used as a solvent, PVdF or PVdF copolymer may be used as a binder, and carbon black or acetylene black may be used as a conductive agent. For example, 94 wt% of a positive active material, 3 wt% of a binder, and 3 wt% of a conductive agent may be mixed in powder form, and then NMP may be added thereto such that a slurry is formed with a solid content of 70 wt%. This slurry may then be coated, dried, and rolled to prepare a positive electrode plate.

The positive electrode current collector may be, in general, prepared to have a thickness in a range of about 3 micrometers (*µ*m) to about 50 *µ*m. The positive electrode current collector is not particularly limited, and may be any suitable material as long as the positive electrode current collector has suitable electrical conductivity without causing an undesirable chemical change in a battery. Examples of the positive electrode current collector include stainless steel, aluminum, nickel, titanium, and sintered carbon; and aluminum or stainless steel, the aluminum and the stainless steel each being surface-treated with carbon, nickel, titanium, or silver. The positive electrode current collector may be processed to have fine bumps on surfaces thereof so as to enhance a binding force of the positive active material to the current collector. The positive electrode current collector may be used in any of various suitable forms including a film, a sheet, a foil, a net, a porous structure, a foam, and a non-woven fabric.

In some embodiments, the negative electrode may include a negative active material including a metalloid alloyable with lithium and/or a carbonaceous negative active material.

In some embodiments, the negative active material including a metalloid alloyable with lithium may include at least one selected from silicon (Si), a silicon-carbon composite material including Si particles, and SiO_{a'} (wherein 0<a'<2).

In some embodiments, the Si particles in the silicon-carbon composite material may have an average diameter of 200 nanometers (nm) or less.

For example, a capacity of the Si-C composite material may be in a range of about 600 mAh/g to about 2000 mAh/g. For example, a capacity of the Si-C composite material may be in a range of about 800 mAh/g to about 1600 mAh/g.

For example, SiO_{a'} or the Si-C composite material may be used as a mixture with a graphite material. For example, 12% of a Si-C composite material having a capacity of 1300 mAh/g, 85% of graphite, and 3% of a binder may be used to constitute a negative electrode having a capacity of 500 mAh/g, and the performance of a battery prepared by using the negative electrode is better than that of a battery prepared by using SiO_{a'} or a Si-C composite material having a capacity of 500 mAh/g.

Examples of the negative active material include, in addition to the aforementioned negative active materials, tin (Sn), Al, germanium (Ge), lead (Pb), Bi, Sb, a Si-Y' alloy (wherein Y' may be an alkali metal, an alkaline earth-metal, a Group XIII element, a Group XIV element, a transition metal, a rare-earth element, or a combination thereof, and Y' may not be Si), and a Sn-Y' alloy (wherein Y' may be an alkali metal, an alkaline earth-metal, a Group XIII element, a Group XIV element, a transition metal, a rare-earth element, or a combination thereof, and Y may not be Sn). Y' may be Mg, Ca, Sr, barium (Ba), radium (Ra), Sc, Y, Ti, Zr, hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, Ge, P, arsenic (As), Sb, Bi, S, selenium (Se), tellurium (Te), polonium (Po), or a combination thereof.

A negative electrode may be prepared by the following method.

The negative electrode may be prepared by applying, drying, and pressing a negative electrode active material on a negative electrode current collector. In addition to the above-described negative electrode active materials, a negative active material composition in which a binder and a solvent are mixed may be prepared, if necessary.

The negative active material composition may further include a conductive agent or a filler.

In one or more embodiments, the binder, the solvent, the conductive agent, and the filler used for the positive active material composition may also be used for the negative active material composition.

In the negative active material composition, water may be used as a solvent. For example, water may be used as a solvent, CMC or SBR, acrylate, and methacrylate-based copolymers may be used as a binder, and carbon black, acetylene black, and graphite may be used as a conductive agent. For example, 94 wt% of a negative active material including a Si-C composite material and graphite, 3 wt% of a binder, and 3 wt% of a conductive agent may be mixed in powder form, and water is added thereto so that a solid in the mixture is 70 wt% to prepare a slurry. Then, the slurry may be coated, dried, and pressed on a negative electrode current collector to prepare a negative electrode plate.

A loading level of the negative active material thus prepared may be determined according to a loading level of the positive active material.

For example, a loading level of the negative active material composition per gram may be about 12 mg/cm² or more, in other embodiments, about 15 mg/cm² or more, depending on a capacity of the negative active material composition per gram. Also, an electrode density of the negative active material composition may be about 1.5 g/cc or more, in other embodiments, about 1.6 g/cc or more. The capacity per gram may change by controlling a ratio of a Si-C composite material to graphite. For example, a maximum capacity of graphite is about 360 mAh/g, and when the negative active material composition includes 84% of graphite, 14% of a Si-C composite material having a capacity of 1300 mAh/g, and 2% of a binder, the negative electrode may exhibit a capacity of about 500 mAh/g. When the Si-C composite material is mixed with SiO_{a'}, a capacity of the negative electrode may be in a range of about 380 mAh/g to about 800 mAh/g. When the capacity is about 380 mAh/g or less, the mixing has no effect, and when the capacity is higher than about 800 mAh/g, a retention ratio may be deteriorated.

In an embodiment, in order to achieve a high cell energy density, a loading level of the prepared negative active material composition may be about 15 mg/cm² to about 25 mg/cm², and an electrode density thereof may be about 1.6 g/cc to about 2.3 g/cc.

When a loading level and an electrode density of the negative active material composition are within any of these ranges, a battery including a negative electrode prepared from the negative active material composition may have a high cell energy density of about 500 Wh/L or greater.

The negative electrode current collector may be, in general, prepared to have a thickness in a range of about 3 *µ*m to about 50 *µ*m. The negative electrode current collector is not particularly limited, and may be any suitable material as long as the negative electrode current collector has suitable electrical conductivity without causing an undesirable chemical change in a battery. Examples of the negative electrode current collector may include copper, stainless steel, aluminum, nickel, titanium, and sintered carbon; copper or stainless steel, the copper and the stainless steel each being surface-treated with carbon, nickel, titanium, or silver; and an aluminum-cadmium alloy. In addition, like the positive electrode current collector, the negative electrode current collector may be processed to have fine bumps on surfaces of the negative electrode current collector to enhance a binding force of the negative active material to the current collector. The negative electrode current collector may be used in any of various suitable forms including a film, a sheet, a foil, a net, a porous structure, a foam, and a non-woven fabric.

In one embodiment, the lithium secondary battery may have a direct current internal resistance (DCIR) increase ratio of about 150% or lower after 300 charging/discharging cycles at a temperature of 45°C under conditions including a charging/discharging current of 0.3 C to 1 C/0.3 C to 1 C, a driving voltage in a range of about 2.8 V to about 4.3 V (for example, about 2.8 V to about 4.2 V), and CC-CV 1/10C cut-off.

That is, as compared with related Ni-rich lithium secondary batteries, the lithium secondary battery may have a significantly low increase in DCIR. Accordingly, the lithium secondary battery may exhibit excellent battery characteristics.

For example, an operating voltage of the lithium secondary battery may be in a range of about 2.8 V to about 4.2 or 4.3 V.

For example, an energy density of the lithium secondary battery may be about 500 Wh/L or greater.

In an embodiment, the lithium secondary battery may further include a separator between the positive electrode and the negative electrode. The separator may be an insulating thin film having excellent ion permeability and mechanical strength. The separator may have a pore diameter in a range of about 0.001 *µ*m to about 1 *µ*m in general, and a thickness thereof may be in a range of about 3 *µ*m to about 30 *µ*m in general. Examples of the separator include a chemically resistant and hydrophobic olefin-based polymer, e.g., polypropylene; and a sheet or non-woven fabric formed of glass fiber or polyethylene. When a solid electrolyte is used as an electrolyte, the solid electrolyte may serve as a separator.

The electrolyte may further include, in addition to the foregoing electrolyte, an organic solid electrolyte and an inorganic solid electrolyte.

Examples of the organic solid electrolyte include a polyethylene derivative, a polyethylene oxide derivative, a polypropylene oxide derivative, a phosphoric acid ester polymer, polyester sulfide, a polyvinyl alcohol, PVdF, and a polymer including a dissociable ionic group.

Examples of the inorganic solid electrolyte include a lithium nitride, such as Li₃N, LiI, Li₅NI₂, Li₃N-LiI-LiOH, Li₂SiS₃, Li₄SiO₄, Li₄SiO₄-LiI-LiOH, or Li₃PO₄-Li₂S-SiS₂; a halide; and a sulfate.

The lithium secondary battery may be prepared by a general method known in the art, that is, the lithium secondary battery may be prepared by injecting an electrolyte between a positive electrode and a negative electrode.

The aforementioned positive electrode, negative electrode, and separator may be wound or folded, and then housed in a battery case. Then, the battery case may be filled with an electrolyte and then sealed by a cap assembly member, to thereby complete the preparation of a lithium secondary battery. The battery case may be a cylindrical type, a rectangular type, or a thin-film type.

The lithium secondary battery may be classified as a winding type or a stack type depending on a structure of electrodes, or as a cylindrical type, a rectangular type, a coin type, or a pouch type, depending on an exterior shape thereof.

Methods of manufacturing a lithium secondary battery are widely known in the art and thus a detailed description thereof is omitted.

According to an aspect, a battery module may include the lithium secondary battery as a unit cell.

According to another aspect, a battery pack may include the battery module.

According to still another aspect, a device may include the battery pack. Examples of the device include power tools powered by an electric motor; electric cars, e.g., electric vehicles (EVs), hybrid electric vehicles (HEVs), plug-in hybrid electric vehicles (PHEVs); electric two-wheeled vehicles, e.g., e-bikes and e-scooters; electric golf carts; and power storage systems. However, embodiments of the device are not limited thereto.

In addition, the lithium secondary battery may be used in any applications that require high-power output and a high voltage, and operate under high-temperature conditions.

One or more embodiments will now be described in more detail with reference to the following examples. However, these examples are provided for illustrative purposes only and should not be construed as limiting the scope of the one or more embodiments.

### Example 1

### (Preparation of positive electrode)

LiNi_{0.8}Co_{0.15}Mn_{0.05}O₂, as a positive active material; carbon black, as a conductive agent; and PVdF, as a binder, were added in a weight ratio of 94:3:3 to NMP and mixed to prepare a mixture. Subsequently, the mixture was dispersed and coated onto both surfaces of an aluminum foil having a thickness of about 16 µm, wherein a loading level of each of the two surfaces was 37 mg/cm². The aluminum foil was then dried and roll-pressed to prepare a positive electrode having an electrode density of 3.6 g/cc.

### (Preparation of negative electrode)

Graphite, CMC, and SBR were added in a weight ratio of 98:1.5:0.5 to NMP and mixed and dispersed therein to prepare a mixture. Subsequently, the mixture was dispersed and coated onto both surfaces of a copper foil having a thickness of about 10 µm, wherein a surface area of each of the two surfaces was 21.86 mg/cm². The copper foil was then dried and roll-pressed to prepare a negative electrode having an electrode density of 1.65 g/cc.

### (Preparation of electrolyte)

1.5 wt% of VC and 1 wt% of TMP were added to 1.15 M of LiPF₆ and EC/EMC/DMC (at a volume ratio of 2/4/4) based on the total weight of an electrolyte to prepare an electrolyte.

### (Preparation of lithium secondary battery)

A separator formed of polypropylene having a thickness of 16 microns was disposed between the positive electrode and the negative electrode, and the electrolyte was injected thereto, thereby completing the manufacture of a lithium secondary battery.

### Example 2

A lithium secondary battery was prepared in the same manner as in Example 1, except that TMP was added at an amount of 2 wt% instead of 1 wt% to prepare the electrolyte.

### Example 3

A lithium secondary battery was prepared in the same manner as in Example 1, except that LiNi_{0.85}Co_{0.1}Mn_{0.05}O₂ was used instead of LiNi_{0.8}Co_{0.15}Mn_{0.05}O₂ as a positive active material.

### Example 4

A lithium secondary battery was prepared in the same manner as in Example 1, except that LiNi_{0.88}Co_{0.08}Mn_{0.04}O₂ was used instead of LiNi_{0.8}Co_{0.15}Mn_{0.05}O₂ as a positive active material.

### Example 5

A lithium secondary battery was prepared in the same manner as in Example 4, except that 1 wt% of triphenylphosphate (TPP) was used instead of 1 wt% of TMP.

### Example 6

A lithium secondary battery was prepared in the same manner as in Example 1, except that LiNi_{0.88}Co_{0.08}Al_{0.04}O₂ was used instead of LiNi_{0.8}Co_{0.15}Mn_{0.05}O₂ as a positive active material.

### Example 7

A lithium secondary battery was prepared in the same manner as in Example 6, except that 1 wt% of TPP was used instead of 1 wt% of TMP.

### Comparative Example 1

A lithium secondary battery was prepared in the same manner as in Example 1, except that 1 wt% of TMP was not added to prepare the electrolyte.

### Comparative Example 2

A lithium secondary battery was prepared in the same manner as in Example 1, except that LiNi_{0.6}Co_{0.2}Mn_{0.2}O₂ was used instead of LiNi_{0.8}Co_{0.15}Mn_{0.05}O₂, and 2 wt% of TMP was added instead of 1 wt% of TMP to prepare the electrolyte.

### Comparative Example 3

A lithium secondary battery was prepared in the same manner as in Example 1, except that 3 wt% of TPP was used instead of 1 wt% of TMP.

### Example 8

### (Preparation of positive electrode)

The positive electrode prepared in Example 1 was used.

### (Preparation of negative electrode)

SCN (an active material that is designed to exhibit a capacity of 1300 mAh/g by carbon coating graphite after dispersing Si particles having an average particle diameter of 100 nm on the graphite) available from BTR, graphite, CMC, and SBR were added in a weight ratio of 14:84:1.5:0.5 to NMP and mixed to prepare a mixture. Subsequently, the mixture was dispersed and coated onto both surfaces of a copper foil having a thickness of about 10 µm, wherein a loading level of each of the both surfaces was 16.5 mg/cm². The copper foil was then dried and roll-pressed to prepare a negative electrode having an electrode density of 1.65 g/cc. Here, SCN had Si particles on graphite.

### (Preparation of electrolyte)

1.5 wt% of VC and 1 wt% of TMP were added to 1.15 M of LiPF₆ and FEC/EC/EMC/DMC (at a volume ratio of 7/7/46/40) based on the total weight of an electrolyte to prepare an electrolyte.

### (Preparation of lithium secondary battery)

A separator formed of polypropylene having a thickness of 16 microns was disposed between the positive electrode and the negative electrode, and the electrolyte was injected thereto, thereby completing the manufacture of a lithium secondary battery.

### Example 9

A lithium secondary battery was prepared in the same manner as in Example 8, except that 2 wt% of TMP was added instead of 1 wt% of TMP to prepare the electrolyte.

### Example 10

A lithium secondary battery was prepared in the same manner as in Example 8, except that LiNi_{0.85}Co_{0.1}Mn_{0.05}O₂ was used instead of LiNi_{0.8}Co_{0.15}Mn_{0.05}O₂ as a positive active material.

### Example 11

A lithium secondary battery was prepared in the same manner as in Example 8, except that LiNi_{0.88}Co_{0.08}Mn_{0.04}O₂ was used instead of LiNi_{0.8}Co_{0.15}Mn_{0.05}O₂ as a positive active material.

### Example 12

A lithium secondary battery was prepared in the same manner as in Example 11, except that 1 wt% of TPP was used instead of 1 wt% of TMP.

### Example 13

A lithium secondary battery was prepared in the same manner as in Example 8, except that LiNi_{0.88}Co_{0.08}Al_{0.04}O₂ was used instead of LiNi_{0.8}Co_{0.15}Mn_{0.05}O₂ as a positive active material.

### Example 14

A lithium secondary battery was prepared in the same manner as in Example 13, except that 1 wt% of TPP was used instead of 1 wt% of TMP.

### Comparative Example 4

A lithium secondary battery was prepared in the same manner as in Example 8, except that 1 wt% of TMP was not added to prepare the electrolyte.

### Comparative Example 5

A lithium secondary battery was prepared in the same manner as in Example 8, except that LiNi_{0.6}Co_{0.2}Mn_{0.2}O₂ was used instead of LiNi_{0.8}Co_{0.15}Mn_{0.05}O₂ as a positive active material, and 2 wt% of TMP was added instead of 1 wt% of TMP.

### Comparative Example 6

A lithium secondary battery was prepared in the same manner as in Example 8, except that 3 wt% of TPP was used instead of 1 wt% of TMP.

### Example 15

### (Preparation of positive electrode)

The positive electrode prepared in Example 1 was used.

### (Preparation of negative electrode)

The negative electrode prepared in Example 8 was used.

### (Preparation of electrolyte)

1 wt% of VC, 0.3 wt% of maleic anhydride (MA), and 1 wt% of TMP were added to 1.15 M of LiPF₆ and FEC/EC/EMC/DMC (at a volume ratio of 7/7/46/40) based on the total weight of an electrolyte to prepare an electrolyte.

### (Preparation of lithium secondary battery)

A separator formed of polypropylene having a thickness of 16 microns was disposed between the positive electrode and the negative electrode, and the electrolyte was injected thereto, thereby completing the manufacture of a lithium secondary battery.

### Example 16

A lithium secondary battery was prepared in the same manner as in Example 15, except that 2 wt% of TMP was used instead of 1 wt% of TMP to prepare the electrolyte.

### Example 17

A lithium secondary battery was prepared in the same manner as in Example 15, except that LiNi_{0.85}Co_{0.1}Mn_{0.05}O₂ was used instead of LiNi_{0.8}Co_{0.15}Mn_{0.05}O₂ as a positive active material.

### Example 18

A lithium secondary battery was prepared in the same manner as in Example 15, except that LiNi_{0.88}Co_{0.08}Mn_{0.04}O₂ was used instead of LiNi_{0.8}Co_{0.15}Mn_{0.05}O₂ as a positive active material.

### Example 19

A lithium secondary battery was prepared in the same manner as in Example 18, except that 1 wt% of TPP was used instead of 1 wt% of TMP.

### Example 20

A lithium secondary battery was prepared in the same manner as in Example 15, except that 0.3 wt% of MMDS based on the total weight of the electrolyte was further added to prepare the electrolyte.

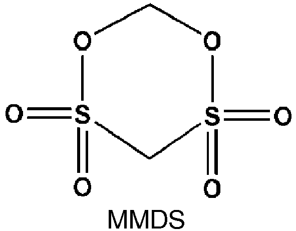

### Example 21

A lithium secondary battery was prepared in the same manner as in Example 20, except that 2 wt% of TMP was added instead of 1 wt% of TMP to prepare the electrolyte.

### Example 22

A lithium secondary battery was prepared in the same manner as in Example 20, except that LiNi_{0.85}Co_{0.1}Mn_{0.05}O₂ was used instead of LiNi_{0.8}Co_{0.15}Mn_{0.05}O₂ as a positive active material.

### Example 23

A lithium secondary battery was prepared in the same manner as in Example 20, except that LiNi_{0.88}Co_{0.08}Mn_{0.04}O₂ was used instead of LiNi_{0.8}Co_{0.15}Mn_{0.05}O₂ as a positive active material.

### Example 24 (comparative example)

A lithium secondary battery was prepared in the same manner as in Example 15, except that 1 wt% of tris(2,2,2-trifluoroethyl)phosphate (TFEP) was used instead of 1 wt% of TMP.

### Comparative Example 7

A lithium secondary battery was prepared in the same manner as in Example 15, except that 1 wt% of TEPi based on the total weight of the electrolyte was further added to prepare the electrolyte.

### Evaluation Example 1: Lifespan and resistance evaluation

### (1) When negative active material is graphite, and additive includes phosphate-based compound and VC

The lithium secondary batteries prepared in Examples 1 to 7 and Comparative Examples 1 to 3 each underwent 300 charging/discharging cycles at 45°C under conditions including a charging/discharging current of 1C/1C, a driving voltage in a range of about 2.8 V to about 4.3 V, and CC-CV 1/10C cut-off, and then a DCIR increase ratio and lifespan characteristics of each of the batteries were measured. The results are shown in Table 1. Here, lifespan characteristics were determined by calculating a ratio of a capacity of the battery after the 300 charging/discharging cycles based on a capacity of the battery after an initial charging/discharging cycle under the same conditions.

**[Table 1]**

| | Lifespan (%) | DCIR increase ratio (%) |
|---|---|---|
| Example 1 | 87 | 128 |
| Example 2 | 87 | 130 |
| Example 3 | 86 | 134 |
| Example 4 | 84 | 138 |
| Example 5 | 83 | 142 |
| Example 6 | 83 | 136 |
| Example 7 | 83 | 137 |
| Comparative Example 1 | 82 | 162 |
| Comparative Example 2 | 81 | 159 |
| Comparative Example 3 | 67 | 186 |

As shown in Table 1, the lithium secondary battery including the electrolyte including the phosphate-based compound of one of Examples 1 to 7 exhibited excellent lifespan characteristics and a decreased DCIR increase ratio compared to those of the battery of Comparative Example 1 not including a phosphate-based compound. Also, when TMP or triphenyl phosphate was used as a phosphate-based compound, in both cases, the batteries had excellent lifespan characteristics and a DCIR increase ratio of about 150% or lower.

It is deemed that this resulted because a stable protecting layer is formed due to a phosphate-based compound on a negative electrode surface including graphite, and thus, in spite of repeating charging/discharging processes, electrochemical characteristics of the negative electrode were maintained.

The battery of Comparative Example 2 using a positive electrode containing a small amount of Ni had a decreased lifespan and an increased DCIR increase ratio, compared to those of the batteries of Examples 1 to 7.

Also, in a case of the battery containing a large amount of phosphate prepared in Comparative Example 3, the battery had a decreased lifespan and an increased DCIR increase ratio compared to those of the batteries of Examples 1 to 7. It is deemed that this may have resulted because self-decomposition of the phosphate-based compound occurred significantly, and thus thin film resistance was increased, which resulted in deterioration of battery capacity, storage stability, and cycle characteristics when an amount of the phosphate-based compound in the electrolyte is 3 wt% or higher.

### (2) When negative active material is silicon (Si), and an additive includes phosphate-based compound. VC, and FEC

The lithium secondary batteries prepared in Examples 8 to 14 and Comparative Examples 4 to 6 each underwent 300 charging/discharging cycles at 45°C under conditions including a charging/discharging current of 1C/1C, a driving voltage in a range of about 2.8 V to about 4.3 V, and CC-CV 1/10C cut-off, and then a DCIR increase ratio and lifespan characteristics of each of the batteries were measured. The results are shown in Table 2. Here, lifespan characteristics were determined by calculating a ratio of a capacity of the battery after the 300 charging/discharging cycles based on a capacity of the battery after an initial charging/discharging cycle under the same conditions.

**[Table 2]**

| | Lifespan (%) | DCIR increase ratio (%) |
|---|---|---|
| Example 8 | 83 | 131 |
| Example 9 | 83 | 133 |
| Example 10 | 82 | 132 |
| Example 11 | 81 | 133 |
| Example 12 | 80 | 139 |
| Example 13 | 80 | 136 |
| Example 14 | 80 | 134 |
| Comparative Example 4 | 81 | 157 |
| Comparative Example 5 | 76 | 164 |
| Comparative Example 6 | 60 | 178 |

As shown in Table 2, the lithium secondary battery including the electrolyte including the phosphate-based compound of one of Examples 8 to 14 exhibited excellent lifespan characteristics and a decreased DCIR increase ratio compared to those of the battery of Comparative Example 4 not including a phosphate-based compound. Also, when trimethyl phosphate or triphenyl phosphate was used as a phosphate-based compound, in both cases, the batteries had excellent lifespan characteristics and a DCIR increase ratio of about 150% or lower.

It is deemed that, as well as in the case of the graphite negative electrode, this resulted because a stable protecting layer is formed due to a phosphate-based compound on a negative electrode surface including a composite material of Si and a graphite, and thus, in spite of repeating charging/discharging processes, electrochemical characteristics of the negative electrode were maintained.

The battery of Comparative Example 5 using a positive electrode containing a small amount of Ni had a decreased lifespan and an increased DCIR increase ratio, compared to those of the batteries of Examples 8 to 14.

Also, in a case of the battery containing a large amount of phosphate prepared in Comparative Example 6, the battery had a decreased lifespan and an increased DCIR increase ratio compared to those of the batteries of Examples 8 to 14. It is deemed that this may have resulted because when an amount of the phosphate-based compound in the electrolyte is 3 wt% or higher, self-decomposition of the phosphate-based compound occurred significantly, and thus thin film resistance was increased and CO₂ thus produced had a negative influence thereon, which resulted in deterioration of battery capacity, storage stability, and cycle characteristics.

### (3) When a negative active material is a composite material of Si and a graphite, and an additive includes phosphate-based compound, VC, FEC, and MA

The lithium secondary batteries prepared in Examples 15 to 24 and Comparative Example 7 each underwent 300 charging/discharging cycles at 45°C under conditions including a charging/discharging current of 1C/1C, a driving voltage in a range of about 2.8 V to about 4.3 V, and CC-CV 1/10C cut-off, and then a DCIR increase ratio and lifespan characteristics of each of the batteries were measured. The results are shown in Table 3. Here, lifespan characteristics were determined by calculating a ratio of a capacity of the battery after the 300 charging/discharging cycles based on a capacity of the battery after an initial charging/discharging cycle under the same conditions.

**[Table 3]**

| | Lifespan (%) | DCIR increase ratio (%) |
|---|---|---|
| Example 15 | 84 | 128 |
| Example 16 | 84 | 128 |
| Example 17 | 84 | 127 |
| Example 18 | 82 | 126 |
| Example 19 | 81 | 132 |
| Example 20 | 84 | 118 |
| Example 21 | 84 | 119 |
| Example 22 | 84 | 117 |
| Example 23 | 82 | 117 |
| Example 24 | 80 | 141 |
| Comparative Example 7 | 79 | 161 |

As shown in Table 3, the lithium secondary batteries of Examples 15 to 24 all exhibited excellent lifespan characteristics and a DCIR increase ratio of about 150% or lower. Particularly, the batteries of Examples 20 to 23 further including MMDS in the electrolyte had a low DCIR increase ratio of about 130% or lower. This result is deemed that when the electrolyte includes MMDS, MMDS reacts with cation Ni³⁺, which stabilizes the cation Ni³⁺ and may result in decrease in resistance.

As in Comparative Example 7, when a phosphite-based compound is used together with a phosphate-based compound, a retention ratio may decrease. This result is deemed due to an increase in resistance.

As described above, according to one or more embodiments, when an amount of Ni in a positive active material increases, a capacity of a battery may be maximized, and a phosphate-based compound may be included in an electrolyte to improve lifespan characteristics and resistance characteristics of a lithium secondary battery including the positive active material.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described, it will be understood by those of ordinary skill in the art that various changes in form and details may be made therein without departing from the scope as defined by the following claims.

## Claims

1. A lithium secondary battery comprising:
a positive electrode;
a negative electrode; and
an electrolyte disposed between the positive electrode and the negative electrode,
wherein the positive electrode comprises a positive electrode active material represented by Formula 1,
the electrolyte comprises a lithium salt; a non-aqueous solvent; and a phosphate-based compound represented by Formula 2, and
the phosphate-based compound is comprised at an amount of lower than 3 wt% based on the total weight of the electrolyte:
<Formula 1> LiₓNi_{y}M_{1-y}O_{2-z}A_{z} 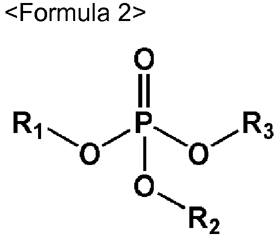
wherein, in Formula 1,
0.9≤x≤1.2, 0.7≤y≤0.98, and 0≤z<0.2,
M is at least one element selected from the group consisting of Al, Mg, Mn, Co, Fe, Cr, V, Ti, Cu, B, Ca, Zn, Zr, Nb, Mo, Sr, Sb, W, and Bi;
A is an element having an oxidation number of -1, -2, or -3;
wherein, in Formula 2,
R₁ to R₃ are each independently an unsubstituted linear or branched C₁-C₃₀ alkyl group or an unsubstituted C₆-C₆₀ aryl group.

2. The lithium secondary battery of claim 1, wherein the phosphate-based compound is comprised at an amount in a range of 0.1 wt% or more to lower than 3 wt% based on the total weight of the electrolyte.

3. The lithium secondary battery of claims 1 or 2, wherein the phosphate-based compound is selected from trimethyl phosphate, triethyl phosphate, and triphenyl phosphate.

4. The lithium secondary battery of any of claims 1-3, wherein the lithium salt is selected from the group consisting of lithium difluoro(oxalato)borate (LiDFOB), lithium bis(oxalato)borate (LiBOB), lithium difluorobis(oxalato)phosphate (LiDFOP), LiBF₄, LiPF₆, LiCF₃SO₃, (CF₃SO₂)₂NLi, (FSO₂)₂NLi, and a mixture thereof.

5. The lithium secondary battery of any of claims 1-4, wherein the non-aqueous solvent is selected from the group consisting of dimethyl carbonate (DMC), diethyl carbonate (DEC), ethyl methyl carbonate (EMC), dipropyl carbonate (DPC), methyl propyl carbonate (MPC), ethyl propyl carbonate (EPC), ethylene carbonate (EC), propylene carbonate (PC), butylene carbonate (BC), and a mixture thereof.

6. The lithium secondary battery of any of claims 1-5, wherein the non-aqueous solvent comprises fluoroethylene carbonate (FEC);
preferably wherein the FEC is comprised at an amount in a range of 0.1 volume% (vol%) to 10 vol% based on the total volume of the non-aqueous solvent.

7. The lithium secondary battery of any of claims 1-6, wherein the electrolyte comprises a carbonate comprising a carbon-carbon single bond, a carbon-carbon double bond or a carbon-carbon triple bond, , a carboxylic acid anhydride comprising a carbon-carbon single bond, a carbon-carbon double bond or a carbon-carbon triple bond, or a combination thereof.

8. The lithium secondary battery of any of claims 1-7, wherein the electrolyte further comprises vinylene carbonate (VC), vinyl ethylene carbonate (VEC), maleic anhydride, succinic anhydride, or a mixture thereof;
preferably wherein the VC, the maleic anhydride, or the mixture thereof are further comprised at an amount in a range of 0.1 wt% to 3 wt% based on the total weight of the electrolyte.

9. The lithium secondary battery of any of claims 1-8, wherein the electrolyte further comprises a phosphorus (P)-containing compound other than phosphate compound represented by Formula 2, a sulfur (S)-containing compound, or a mixture thereof at an amount in a range of 0.5 wt% to 2 wt% based on the total weight of the electrolyte;
preferably wherein the phosphorus-containing compound is methylene methane disulfonate (MMDS), busulfan, tosyloxydisulfonate, methylene bis methansulfonate, or a mixture thereof.

10. The lithium secondary battery of any of claims 1-9, wherein, in Formula 1, 0.8≤y≤0.98.

11. The lithium secondary battery of any of claims 1-10, wherein the positive active material is represented by Formula 3 or Formula 4:
<Formula 3> Li_{x'}Ni_{y'}Co_{1-y'-z'}Al_{z'}O₂
<Formula 4> Li_{x'}Ni_{y'}Co_{1-y'-z'}Mn_{z'}O₂
wherein, in Formula 3 and Formula 4, 0.9≤x'≤1.2, 0.8≤y'≤0.98, 0<z'<0.1, and 0<1-y'-z'<0.2.

12. The lithium secondary battery of any of claims 1-11, wherein the positive electrode comprises one or more selected from LiNi_{0.8}Co_{0.15}Mn_{0.05}O₂, LiNi_{0.85}Co_{0.1}Mn_{0.05}O₂, LiNi_{0.88}Co_{0.08}Mn_{0.04}O₂, LiNi_{0.88}Co_{0.08}Al_{0.04}O₂, Li_{1.02}Ni_{0.80}Co_{0.15}Mn_{0.05}O₂, Li_{1.02}Ni_{0.85}Co_{0.10}Mn_{0.05}O₂, Li_{1.02}Ni_{0.88}Co_{0.08}Mn_{0.04}O₂, Li_{1.02}Ni_{0.88}Co_{0.08}Al_{0.04}O₂ LiNi_{0.8}Co_{0.15}Al_{0.05}O₂, LiNi_{0.88}Co_{0.1}Al_{0.02}O₂, LiNi_{0.88}Co_{0.1}Mn_{0.02}O₂, LiNi_{0.85}Co_{0.1}Al_{0.05}O₂, and LiNi_{0.88}Co_{0.1}Mn_{0.02}O₂.

13. The lithium secondary battery of any of claims 1-12, wherein the negative electrode comprises a negative active material comprising a metalloid alloyable with lithium, a carbonaceous negative active material, or a mixture thereof.

14. The lithium secondary battery of claim 13, wherein the negative active material comprising a metalloid alloyable with lithium comprises one or more selected from silicon (Si), a silicon-carbon composite material comprising Si particles, and SiO_{a'} (0<a'<2); and/or
wherein the carbonaceous negative active material comprises graphite.

15. The lithium secondary battery of any of claims 1-14, wherein a direct current internal resistance (DCIR) increase ratio before and after 300 cycles at 45°C is 150% or lower; and/or
wherein a cell energy density is 500 Wh/L or greater.

## Patentansprüche

1. Lithium-Sekundärbatterie, umfassend:
eine positive Elektrode;
eine negative Elektrode; und
einen Elektrolyt, der sich zwischen der positiven und der negativen Elektrode befindet;
wobei die positive Elektrode ein aktives Material der positiven Elektrode umfasst, das durch die Formel 1 dargestellt ist;
wobei der Elektrolyt ein Lithiumsalz; ein nichtwässriges Lösungsmittel; und eine durch die Formel 2 dargestellte Verbindung auf Phosphatbasis umfasst; und
wobei die Verbindung auf Phosphatbasis in einer Menge von weniger als 3 Gew.-% auf der Basis des Gesamtgewichts des Elektrolyts enthalten ist:
<Formel 1> LiₓNi_{y}M_{1-y}O_{2-z}A_{z} 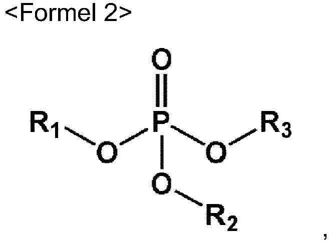
wobei in Formel 1 folgendes gilt:
0,9≤x≤1,2, 0,7≤y≤0,98 und 0≤z<0,2;
M ist mindestens ein Element, das ausgewählt ist aus der Gruppe bestehend aus AI, Mg, Mn, Co, Fe, Cr, V, Ti, Cu, B, Ca, Zn, Zr, Nb, Mo, Sr, Sb, W und Bi;
A ist ein Element mit der Oxidationsstufe -1, -2 oder -3;
wobei in Formel 2 folgendes gilt:
R₁ bis R₃ sind jeweils unabhängig eine unsubstituierte lineare oder verzweigte C₁-C₃₀-Alkylgruppe oder eine unsubstituierte C₆-C₆₀-Arylgruppe.

2. Lithium-Sekundärbatterie nach Anspruch 1, wobei die Verbindung auf Phosphatbasis in einer Menge im Bereich von 0,1 Gew.-% oder mehr bis weniger als 3 Gew.-% auf der Basis des Gesamtgewichts des Elektrolyts enthalten ist.

3. Lithium-Sekundärbatterie nach Anspruch 1 oder 2, wobei die Verbindung auf Phosphatbasis ausgewählt ist aus Trimethylphosphat, Triethylphosphat und Triphenylphosphat.

4. Lithium-Sekundärbatterie nach einem der Ansprüche 1 bis 3, wobei das Lithiumsalz ausgewählt ist aus der Gruppe bestehend aus Lithiumdifluor(oxalato)borat (LiDFOB), Lithiumbis(oxalato)borat (LiBOB), Lithiumdifluorbis(oxalato)phosphat (LiDFOP), LiBF₄, LiPF₆, LiCF₃SO₃, (CF₃SO₂)₂NLi, (FSO₂)₂NLi und einem Gemisch davon.

5. Lithium-Sekundärbatterie nach einem der Ansprüche 1 bis 4, wobei das nichtwässrige Lösungsmittel ausgewählt ist aus der Gruppe bestehend aus Dimethylcarbonat (DMC), Diethylcarbonat (DEC), Ethylmethylcarbonat (EMC), Dipropylcarbonat (DPC), Methylpropylcarbonat (MPC), Ethylpropylcarbonat (EPC), Ethylencarbonat (EC), Propylencarbonat (PC), Butylencarbonat (BC) und einem Gemisch davon.

6. Lithium-Sekundärbatterie nach einem der Ansprüche 1 bis 5, wobei das nichtwässrige Lösungsmittel Fluorethylencarbonat (FEC) umfasst;
wobei das FEC vorzugsweise in einer Menge in einem Bereich von 0,1 Volumenprozent (Vol.-%) bis 10 Vol.-% auf der Basis des Gesamtvolumens des nichtwässrigen Lösungsmittels enthalten ist.

7. Lithium-Sekundärbatterie nach einem der Ansprüche 1 bis 6, wobei der Elektrolyt ein Carbonat umfasst, umfassend eine Kohlenstoff-Kohlenstoff-Einfachbindung, eine Kohlenstoff-Kohlenstoff-Doppelbindung oder eine Kohlenstoff-Kohlenstoff-Dreifachbindung, ein Carbonsäureanhydrid, umfassend eine Kohlenstoff-Kohlenstoff-Einfachbindung, eine Kohlenstoff-Kohlenstoff-Doppelbindung oder eine Kohlenstoff-Kohlenstoff-Dreifachbindung oder eine Kombination davon.

8. Lithium-Sekundärbatterie nach einem der Ansprüche 1 bis 7, wobei der Elektrolyt ferner Vinylencarbonat (VC), Vinylethylencarbonat (VEC), Maleinsäureanhydrid, Bernsteinsäureanhydrid oder ein Gemisch davon umfasst;
wobei das VC, das Maleinsäureanhydrid oder das Gemisch davon vorzugsweise in einer Menge in einem Bereich von 0,1 Gew.-% bis 3 Gew.-% auf der Basis des Gesamtgewichts des Elektrolyts enthalten sind.

9. Lithium-Sekundärbatterie nach einem der Ansprüche 1 bis 8, wobei der Elektrolyt ferner eine andere als durch die Formel 2 dargestellte Phosphatverbindung Phosphor (P) enthaltende Verbindung umfasst, eine Schwefel (S) enthaltende Verbindung oder ein Gemisch davon, in einer Menge in einem Bereich von 0,5 Gew.-% bis 2 Gew.-% auf der Basis des Gesamtgewichts des Elektrolyts;
wobei die Phosphor enthaltende Verbindung vorzugsweise ein Methylenmethandisulfonat (MMDS), Busulfan, Tosyloxydisulfonat, Methylen-bis-Methansulfonat oder ein Gemisch davon ist.

10. Lithium-Sekundärbatterie nach einem der Ansprüche 1 bis 9, wobei in der Formel 1 folgendes gilt: 0,8≤y≤0,98.

11. Lithium-Sekundärbatterie nach einem der Ansprüche 1 bis 10, wobei das positive aktive Material durch die Formel 3 oder die Formel 4 dargestellt ist:
<Formel 3> Li_{x'}Ni_{y'}Co_{1-y'-z'}Al_{z'}O₂
<Formel 4> Li_{x'}Ni_{y'}Co_{1-y'-z'}MN_{z'}O₂,
wobei
in Formel 3 und in Formel 4 folgendes gilt: 0,9≤x'≤1,2, 0,8≤y'≤0,98, 0<z'<0,1 und 0<1-y'-z'<0,2.

12. Lithium-Sekundärbatterie nach einem der Ansprüche 1 bis 11, wobei die positive eines oder mehrere umfasst, die ausgewählt sind aus LiNi_{0,8}Co_{0,15}Mn_{0,05}O₂, LiNi_{0,85}Co_{0,1}Mn_{0,05}O₂, LiNi_{0,88}Co_{0,08}Mn_{0,04}O₂, LiNi_{0,88}Co_{0,08}Al_{0,04}O₂, Li_{1,02}Ni_{0,80}Co_{0,15}Mn_{0,05}O₂, Li_{1,02}Ni_{0,85}Co_{0,10}Mn_{0,05}O₂, Li_{1,02}Ni_{0,88}Co_{0,08}Mn_{0,04}O₂, Li_{1,02}Ni_{0,88}Co_{0,08}Mn_{0,04}O_{2,} LiNi_{0,8}Co_{0,15}Al_{0,05}O₂, LiNi_{0,88}Co_{0,1}Al_{0,02}O₂, LiNi_{0,88}Co_{0,1}Mn_{0,02}O₂, LiNi_{0,85}Co_{0,1}Al_{0,05}O₂ und LiNi_{0,88}Co_{0,1}Mn_{0,02}O₂.

13. Lithium-Sekundärbatterie nach einem der Ansprüche 1 bis 12, wobei die negative Elektrode ein negatives aktives Material umfasst, das ein Metalloid umfasst, das legierbar ist mit Lithium, ein kohlenstoffhaltiges negatives aktives Material oder ein Gemisch davon.

14. Lithium-Sekundärbatterie nach Anspruch 13, wobei das negative aktive Material das ein Metalloid umfasst, das mit Lithium legierbar ist, eines oder mehrere umfasst, die ausgewählt sind aus Silizium (Si), einem Silizium-Kohlenstoff-Verbundstoff, der Si-Teilchen umfasst, und SiO_{a'} (0<a'<2); und/oder
wobei das kohlenstoffhaltige negative aktive Material Graphit umfasst.

15. Lithium-Sekundärbatterie nach einem der Ansprüche 1 bis 14, wobei ein Anstiegsverhältnis des Gleichstrominnenwiderstands (DCIR) vor und nach 300 Zyklen bei 45 °C 150% oder weniger beträgt; und/oder
wobei eine Zellenenergiedichte 500 Wh/L oder mehr beträgt.

## Revendications

1. Batterie secondaire au lithium comprenant :
une électrode positive ;
une électrode négative ; et
un électrolyte disposé entre l'électrode positive et l'électrode négative,
dans laquelle l'électrode positive comprend un matériau actif d'électrode positive représenté par la Formule 1,
l'électrolyte comprend un sel de lithium ; un solvant non aqueux ; et un composé à base de phosphate représenté par la Formule 2, et
le composé à base de phosphate est compris en une quantité de moins de 3 % en poids par rapport au poids total de l'électrolyte :
<Formule 1> LiₓNi_{y}M_{1-y}O_{2-z}A_{z} 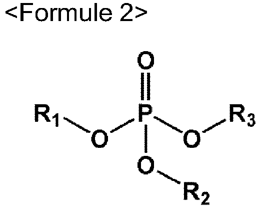
dans laquelle, dans la formule 1,
0,9 ≤ x ≤ 1,2, 0,7 ≤ y ≤ 0,98, et 0 ≤ z < 0,2,
M est au moins un élément choisi dans le groupe constitué par Al, Mg, Mn, Co, Fe, Cr, V, Ti, Cu, B, Ca, Zn, Zr, Nb, Mo, Sr, Sb, W et Bi ;
A est un élément ayant un nombre d'oxydation de -1, -2 ou -3 ;
dans laquelle, dans la Formule 2,
R₁ à R₃ sont chacun indépendamment un groupe alkyle en C₁-C₃₀ non substitué linéaire ou ramifié ou un groupe aryle en C₆-C₆₀ non substitué.

2. Batterie secondaire au lithium de la revendication 1, dans laquelle le composé à base de phosphate est compris en une quantité dans une plage allant de 0,1 % en poids ou plus à moins de 3 % en poids par rapport au poids total de l'électrolyte.

3. Batterie secondaire au lithium de la revendication 1 ou 2, dans laquelle le composé à base de phosphate est choisi parmi le phosphate de triméthyle, le phosphate de triéthyle et le phosphate de triphényle.

4. Batterie secondaire au lithium de l'une quelconque des revendications 1 à 3, dans laquelle le sel de lithium est choisi dans le groupe constitué par le difluoro(oxalato)borate de lithium (LiDFOB), le bis(oxalato)borate de lithium (LiBOB), le difluorobis(oxalato)phosphate de lithium (LiDFOP), LiBF₄, LiPF₆, LiCF₃SO₃, (CF₃SO₂)₂NLi, (FSO₂)₂NLi, et un mélange de ceux-ci.

5. Batterie secondaire au lithium de l'une quelconque des revendications 1 à 4, dans laquelle le solvant non aqueux est choisi dans le groupe constitué par le carbonate de diméthyle (DMC), le carbonate de diéthyle (DEC), le carbonate d'éthylméthyle (EMC), le carbonate de dipropyle (DPC), le carbonate de méthylpropyle (MPC), le carbonate d'éthylpropyle (EPC), le carbonate d'éthylène (EC), le carbonate de propylène (PC), le carbonate de butylène (BC), et un mélange de ceux-ci.

6. Batterie secondaire au lithium de l'une quelconque des revendications 1 à 5, dans laquelle le solvant non aqueux comprend du carbonate de fluoroéthylène (FEC) ;
de préférence dans laquelle le FEC est compris en une quantité dans une plage allant de 0,1 % en volume à 10 % en volume par rapport au volume total du solvant non aqueux.

7. Batterie secondaire au lithium de l'une quelconque des revendications 1 à 6, dans laquelle l'électrolyte comprend un carbonate comprenant une simple liaison carbone-carbone, une double liaison carbone-carbone ou une triple liaison carbone-carbone, un anhydride d'acide carboxylique comprenant une simple liaison carbone-carbone, une double liaison carbone-carbone ou une triple liaison carbone-carbone, ou une combinaison de ceux-ci.

8. Batterie secondaire au lithium de l'une quelconque des revendications 1 à 7, dans laquelle l'électrolyte comprend en outre du carbonate de vinylène (VC), du carbonate de vinyléthylène (VEC), de l'anhydride maléique, de l'anhydride succinique, ou un mélange de ceux-ci ;
de préférence dans laquelle le VC, l'anhydride maléique, ou le mélange de ceux-ci sont en outre compris en une quantité dans une plage allant de 0,1 % en poids à 3 % en poids par rapport au poids total de l'électrolyte.

9. Batterie secondaire au lithium de l'une quelconque des revendications 1 à 8, dans laquelle l'électrolyte comprend en outre un composé contenant du phosphore (P) autre que le composé de phosphate représenté par la Formule 2, un composé contenant du soufre (S), ou un mélange de ceux-ci en une quantité dans une plage allant de 0,5 % en poids à 2 % en poids par rapport au poids total de l'électrolyte ;
de préférence dans laquelle le composé contenant du phosphore est le méthylène méthane disulfonate (MMDS), le busulfane, le tosyloxydisulfonate, le méthylène bis méthane sulfonate, ou un mélange de ceux-ci.

10. Batterie secondaire au lithium de l'une quelconque des revendications 1 à 9, dans laquelle, dans la Formule 1, 0,8 ≤ y ≤ 0,98.

11. Batterie secondaire au lithium de l'une quelconque des revendications 1 à 10, dans laquelle le matériau actif positif est représenté par la Formule 3 ou la Formule 4 :
<Formule 3> Li_{x'}Ni_{y'}Co_{1-y'-z'}Al_{z'}O₂
<Formule 4> Li_{x'}Ni_{y'}Co_{1-y'-z'}Mn_{z'}O₂
dans laquelle, dans la Formule 3 et la Formule 4, 0,9 ≤ x' ≤ 1,2, 0,8 ≤ y' ≤ 0,98, 0 < z' < 0,1 et 0 < 1-y'-z' < 0,2.

12. Batterie secondaire au lithium de l'une quelconque des revendications 1 à 11, dans laquelle l'électrode positive comprend un ou plusieurs composés choisis parmi LiNi_{0,8}Co_{0,15}Mn_{0,05}O₂, LiNi_{0,85}Co_{0,1}Mn_{0,05}O₂, LiNi_{0,88}Co_{0,08}Mn_{0,04}O₂, LiNi_{0,88}Co_{0,08}Al_{0,04}O₂, Li_{1,02}Ni_{0,80}Co_{0,15}Mn_{0,05}O₂, Li_{1,02}Ni_{0,85}Co_{0,10}Mn_{0,05}O₂, Li_{1,02}Ni_{0,88}Co_{0,08}Mn_{0,04}O₂, Li_{1,02}Ni_{0,88}Co_{0,08}Al_{0,04}O₂, LiNi_{0,8}Co_{0,15}Al_{0,05}O₂, LiNi_{0,88}Co_{0,1}Al_{0,02}O₂, LiNi_{0,88}Co_{0,1}Mn_{0,02}O₂, LiNi_{0,85}Co_{0,1}Al_{0,05}O₂, et LiNi_{0,88}Co_{0,1}Mn_{0,02}O₂.

13. Batterie secondaire au lithium de l'une quelconque des revendications 1 à 12, dans laquelle l'électrode négative comprend un matériau actif négatif comprenant un métalloïde pouvant être allié avec du lithium, un matériau actif négatif carboné, ou un mélange de ceux-ci.

14. Batterie secondaire au lithium de la revendication 13, dans laquelle le matériau actif négatif comprenant un métalloïde pouvant être allié avec du lithium comprend un ou plusieurs éléments choisis parmi le silicium (Si), un matériau composite silicium-carbone comprenant des particules de Si, et SiO_{a'} (0 < a' < 2) ; et/ou
dans laquelle le matériau actif négatif carboné comprend du graphite.

15. Batterie secondaire au lithium de l'une quelconque des revendications 1 à 14, dans laquelle un taux d'augmentation de la résistance interne en courant continu (RICC) avant et après 300 cycles à 45 °C est de 150 % ou moins ; et/ou
dans laquelle une densité d'énergie cellulaire est de 500 Wh/l ou plus.
